# DEMANDE DE BREVET EUROPEEN

(11) **EP 3 251 497 A1**
(43) Date de publication de la demande: **06.12.2017**
(21) Numéro de dépôt: 17020236.0
(22) Date de dépôt: 31.05.2017
(51) Int. Cl.: A01G 9/16

(54) **STRUCTURE GÉOMÉTRIE VARIABLE, EN TROIS DIMENSIONS, INTÉGRANT TOUS LES POLYGONES POUR LA PROTECTION DES PLANTES EXOTIQUES, ÉLÉMENT DE FAÇADE, ÉLÉMENT DE TOIT ET PLATINE DE FIXATION POUR LA RÉALISATION D'UNE TELLE STRUCTURE**

(30) Priorité: 02.06.2016 FR 1655007
(71) Demandeur: Eplenier, Gilbert, 39600 Ecleux (FR)
(72) Inventeur: Eplenier, Gilbert, 39600 Ecleux (FR)
(74) Mandataire: Bouchet, Geneviève

(57) **Abrégé**

L'invention concerne des éléments de structure de type élément de toit et élément de façade, et une structure de protection comprenant de tels éléments. L'invention trouve une application notamment pour la réalisation d'un abri hivernal pour plantes exotiques. Construite à partir de seulement deux types d'éléments, la structure présente en effet l'avantage d'être en trois dimensions, modulaire et évolutive : elle peut ainsi être étendue ou réduite en fonction des plantes à protéger.

Un élément de structure comprend un panneau (11 ; 21) comprenant au moins un bord gauche (15 ; 25), un bord droit (16 ; 26) et un bord de dessous (17 ; 27), caractérisé en ce qu'il comprend également un élément de liaison gauche (15a, 15b ; 25a, 25b) solidaire du bord gauche (15 ; 25) du panneau et un élément de liaison droit (16a, 16b ; 26a, 26b) solidaire du bord droit (16 ; 26) du panneau, l'élément de liaison gauche d'un élément de structure étant adapté à coopérer, par l'intermédiaire d'un tube de liaison (28), avec un élément de liaison droit d'un élément de structure adjacent pour associer deux éléments de structure adjacents par une liaison pivot, chaque élément de liaison étant une portion de tube.

La structure comprend N éléments de toit (10) et P éléments de façade (20), P étant un multiple de N et N étant supérieur ou égal à 3.

## Description

### Domaine technique et état de l'art

L'invention concerne la protection des plantes exotiques contre le froid hivernal. L'invention est particulièrement intéressante en ce qu'elle permet de réaliser une structure en trois dimensions, évolutive, à géométrie variable, en associant une pluralité d'éléments de toit et d'éléments de façade.

Dans le même but, le document FR2759856 propose un paravent qui se déplie pour former une structure hexagonale ; les extrémités de chaque panneau sont taillées en diagonale pour former un toit. L'inconvénient d'une telle structure est que ses dimensions sont figées.

### Description de l'invention

L'invention propose de nouveaux éléments de structure, de type élément de toit et élément de façade qui, par leur multiplication, permettent de construire une structure de protection complètement modulable, dont la taille peut être augmentée ou réduite à volonté, de manière simple, en fonction de la croissance de la plante à protéger par exemple. En complément, l'invention propose une platine de fixation angulaire qui facilite le montage de la structure et son arrimage au sol. L'invention propose enfin une structure complète et évolutive adaptée pour la protection des plantes.

Un élément de structure selon l'invention comprend un panneau comprenant au moins un bord gauche, un bord droit et un bord de dessous, caractérisé en ce qu'il comprend également un élément de liaison gauche solidaire du bord gauche du panneau et un élément de liaison droit solidaire du bord droit du panneau, l'élément de liaison gauche d'un élément de structure étant adapté à coopérer, par l'intermédiaire d'un tube de liaison, avec un élément de liaison droit d'un élément de structure adjacent pour associer deux éléments de structure adjacents par une liaison pivot, chaque élément de liaison étant une portion de tube.

Un élément de structure est ainsi réalisé de sorte qu'il est possible d'associer de manière simple plusieurs éléments de structure similaires pour former un toit et des parois verticales de dimensions adaptées à la plante à protéger. Au fur et à mesure de la croissance de la plante, il suffit d'ajouter un ou des éléments de structure pour agrandir la surface couverte. Inversement, les éléments de structure peuvent être aisément séparés les uns des autres ; la structure peut ainsi être aisément démontée, notamment pour être stockée en été.

L'élément de liaison gauche et l'élément de liaison droit d'un élément de structure peuvent être réalisés de différentes façons, l'essentiel étant la réalisation d'une liaison pivot entre deux éléments de structure adjacents. La liaison pivot permet d'ajuster l'inclinaison du toit et l'angle entre deux éléments de structure verticaux en fonction du nombre d'éléments de structure associés comme on le verra mieux plus loin.

Selon un mode de réalisation d'un élément de structure selon l'invention, le panneau comprend une plaque de forme triangulaire ou de forme rectangulaire, par exemple en polycarbonate, et le panneau comprend également :
- trois cornières formant respectivement le bord droit, le bord gauche et le bord de dessous d'un panneau triangulaire, les trois cornières formant ensemble un cadre servant de support à la plaque triangulaire, l'élément de structure formant ainsi un élément de toit triangulaire, ou
- quatre profilés formant respectivement le bord droit, le bord gauche, le bord de dessous et le bord de dessus d'un panneau rectangulaire, les quatre profilés formant ensemble un cadre servant de support à la plaque rectangulaire, l'élément de structure formant ainsi un élément de façade rectangulaire.

Un élément de structure selon l'invention peut comprendre également au moins un élément de maintien agencé pour maintenir la plaque à l'intérieur du cadre, l'élément de maintien étant :
- un taquet amovible coopérant avec un trou correspondant d'une cornière ou d'un profilé du cadre, et / ou
- un gousset positionné dans un angle du cadre, et / ou
- un verrou quart de tour positionné sur la plaque et mobile entre une position ouverte et une position fermée où le verrou coopère avec une cornière.

De tels éléments de maintien permettent de solidariser la plaque à l'intérieur de son cadre. On évite ainsi tout courant d'air entre le cadre et la plaque susceptible d'endommager la plante, notamment en saison froide. De tels éléments de maintien sont toutefois amovibles ; ceci permet d'enlever aisément une plaque, par exemple pour aérer la structure lorsque la température augmente trop à l'intérieur de la structure.

Selon un mode de réalisation d'un élément de structure de type élément de toit, le bord de dessous comprend au moins un élément de liaison gauche de type portion de tube adapté pour coopérer, par l'intermédiaire d'un tube de liaison, avec un élément droit correspondant d'un élément de structure (ici élément de façade) adjacent pour associer un élément de toit au dessus d'un élément de façade.

Selon un mode de réalisation d'un élément de structure de type élément de façade, dans lequel le bord de dessous et le bord de dessus comprennent au moins un élément de liaison gauche ou droit adapté pour coopérer, par l'intermédiaire d'un tube de liaison, avec un élément droit ou gauche correspondant d'un élément de structure adjacent pour :
- associer deux éléments de façade l'un au dessus de l'autre, et /ou
- associer un élément de toit au dessus d'un élément de façade.

Le bord de dessous et, le cas échéant, le bord de dessus sont ainsi réalisés de manière similaire aux bords gauche et droits d'un élément de structure ; la réalisation de l'élément de structure est ainsi simplifiée. De plus, l'assemblage est aisément démontable.

Une platine de fixation angulaire selon l'invention comprend quant à elle une plaque de positionnement comprenant un perçage de référence et une pluralité de perçages complémentaires ; les centres de tous les perçages sont positionnés sur un cercle ; un angle entre un rayon du cercle passant par un perçage complémentaire de rang X et un rayon du cercle passant par le perçage de référence forment un angle égal à un angle entre deux côtés d'un polygone régulier à X côtés. La platine de fixation permet ainsi d'immobiliser deux éléments de façade en rotation l'un par rapport à l'autre, en une position angulaire prédéfinie adaptée aux dimensions souhaitées de la structure comme on le verra mieux plus loin dans des exemples.

Enfin, une structure selon l'invention peut comprendre N éléments de toit identiques et P éléments de façade identiques et tels que décrits ci-dessus, P étant un multiple de N et N étant supérieur ou égal à 3. En choisissant le nombre N d'éléments de toit et le nombre P d'éléments de façade appropriés, il est possible de réaliser toutes les structures de section polygonale souhaitée et de la hauteur souhaitée : une structure de section triangulaire avec N = 3, une structure de section carrée avec N = 4, ... une structure de section octogonale avec N = 8, ... et de hauteur égale à P = 1, 2, 3, ... fois la hauteur d'un élément de façade. La structure est ainsi parfaitement modulaire, adaptable aux plantes à protéger, et aisément évolutive en fonction des besoins des plantes sur le long terme.

Pour positionner deux éléments de façade selon un angle prédéfini fonction de la section polygonale recherchée, la structure peut également comprendre au moins une platine de fixation angulaire telle que décrite ci-dessus et adaptée à coopérer avec un élément de liaison d'un élément de façade selon une liaison pivot.

La structure selon l'invention peut avantageusement être complétée par des moyens pour gérer la température et l'hygrométrie à l'intérieur de la structure, en fonction des besoins des plantes installées sous la structure. On peut prévoir par exemple qu'au moins un élément de toit ou au moins un élément de façade ou au moins une plaque d'un élément de toit ou d'un élément de façade soit ouvrant, soit manuellement soit à ouverture pilotée à distance en fonction de la température et / ou de l'hygrométrie à l'intérieur de la structure. On peut également prévoir un dispositif de chauffage à l'intérieur de la structure, piloté en fonction de la température et / ou de l'hygrométrie à l'intérieur de la structure. Par exemple, on peut prévoir d'ouvrir un élément de toit lorsqu'un thermomètre détecte une température à l'intérieur de la structure supérieure à 20 à 22°C et on peut prévoir d'activer le dispositif de chauffage lorsque le thermomètre détecter une température inférieure à -4 à -6°C à l'intérieur de la structure.

La structure selon l'invention peut également être avantageusement complétée par des moyens pour arrimer la structure au sol.

### Brève description des figures

L'invention sera mieux comprise, et d'autres caractéristiques et avantages de l'invention apparaîtront à la lumière de la description qui suit d'exemples de mise en oeuvre de structures de protection selon l'invention. Ces exemples sont donnés à titre non limitatif. La description est à lire en relation avec les dessins annexés dans lesquels
- les figures 1, 1a sont une vue de face et une vue en coupe AA d'un élément de toit,
- les figures 2, 2a sont des vues de face d'un élément de façade,
- les figures 3 et 4 sont une vue de face et une vue de dessus d'une platine de fixation d'une structure,
- la figure 5 montre l'assemblage d'un élément de toit et d'un élément de façade,
- la figure 6 montre l'assemblage de deux éléments de façade,
- les figures 7 à 9 montrent trois modes de réalisation d'une structure complète selon l'invention.

### Description d'un mode de réalisation de l'invention

Comme dit précédemment, l'invention concerne des éléments de structure de type élément de toit et de type élément de façade, une platine de fixation et une structure comprenant des éléments de toit et des éléments de façade pour former une structure de protection particulièrement bien adaptée pour la protection des plantes exotiques.

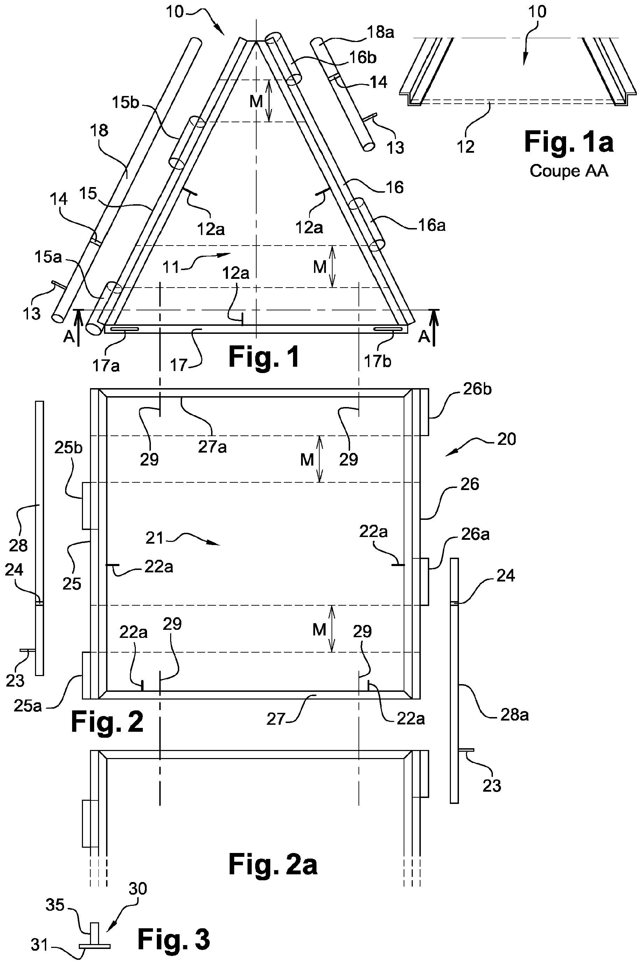

Un élément de toit 10 comprend (fig. 1, 1a) un panneau 11 triangulaire (isocèle ou équilatéral) comprenant un bord gauche 15, un bord droit 16 et un bord de dessous 17 ; il comprend également un élément de liaison gauche solidaire du bord gauche du panneau et un élément de liaison droit solidaire du bord droit du panneau ; l'élément de liaison gauche d'un élément de toit est adapté à coopérer avec un élément de liaison droit d'un élément de toit adjacent pour associer deux éléments de toit adjacents par une liaison pivot. Plusieurs modes de réalisation peuvent être envisagés pour les éléments de liaison, l'essentiel étant dans le cadre de l'invention d'avoir une liaison pivot entre deux éléments de toit. Selon un mode de réalisation (figure 1), un élément de liaison gauche ou droit d'un élément de toit 10 est une portion de tube 15a, 15b, adaptée pour coopérer, par l'intermédiaire d'un tube de liaison 18, 18a avec une portion de tube correspondante 16a, 16b formant élément de liaison d'un élément de toit adjacent. Ainsi, une fois associés par un tube 18, les éléments de toit adjacents peuvent pivoter l'un par rapport à l'autre mais ils peuvent aussi coulisser en translation l'un par rapport à l'autre ; ceci facilite l'assemblage de deux éléments de toit, mais aussi l'assemblage des éléments de toit aux éléments de façade. Après mise en place, les éléments de structure peuvent être immobilisés les uns par rapport aux autres, comme on le verra mieux plus loin. Dans l'exemple représenté (fig. 1, 1a), deux éléments de liaison 15a, 15b, respectivement 16a, 16b sont prévus pour sur le bord gauche 15, respectivement le bord droit 16, pour une meilleure rigidité de l'ensemble. Un élément 15a sur le bord gauche et un élément 16a sur le bord droit pourrait suffire.

Le panneau triangulaire d'un élément de toit peut comprendre :
- une plaque (12) de forme triangulaire, par exemple en polycarbonate,
- trois cornières ou profilés en Z (15, 16, 17) formant respectivement le bord droit, le bord gauche et le bord de dessous du panneau triangulaire, les trois cornières formant ensemble un cadre servant de support à la plaque triangulaire.

Dans l'exemple représenté fig. 1, 1a, le bord gauche 15 et le bord droit 16 sont réalisés par des profilés ayant une section en Z ; la plaque 12 vient en appui sur une branche du Z et un corps (= partie centrale) du Z forme une butée qui, à un jeu près, empêche une translation de la plaque. Pour un meilleur maintien, la plaque 12 peut être collée sur le cadre par exemple au silicone ou solidarisée au cadre par tout autre moyen (vis, rivet, ...). De préférence, la plaque 12 est solidarisée au cadre par des moyens amovibles tels que :
- un ou des taquets 12a amovibles coopérant avec un trou correspondant d'un cornière ou d'un profilé du cadre, et / ou
- un gousset positionné dans un angle du cadre de sorte que la plaque soit immobilisée localement entre le cadre et le gousset,
- un verrou, par exemple un verrou quart de tour, positionné sur la plaque et mobile entre une position ouverte où la plaque n'est pas maintenue contre le cadre et une position fermée où le verrou coopère avec une cornière ou un profilé pour maintenir la plaque contre le cadre.

Par gousset on entend ici une plaquette, ici de forme triangulaire, fixée (par ex. soudée) sur le cadre dans un angle du cadre de sorte que un angle de la plaque 12 puisse être glissé entre la plaquette et le cadre.

Les éléments d liaison 15a, 15b, 16a, 16b sont solidarisés (ici soudés) entre la deuxième branche du Z et le corps du Z de la section des profilés formant le bord gauche 15 et le bord droit 16.

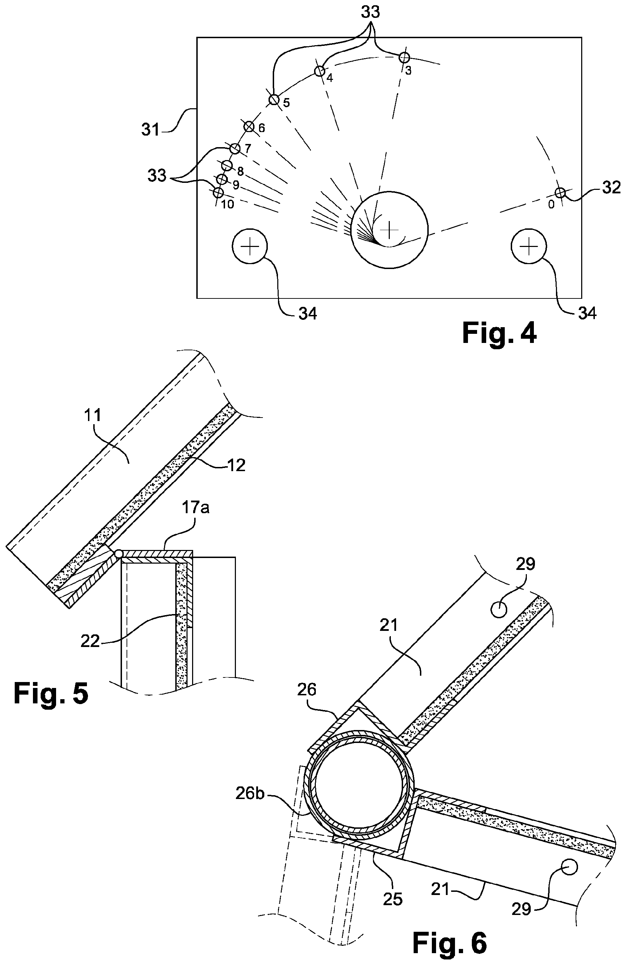

Dans l'exemple représenté également, le bord de dessous 17 est un plat ou une cornière en L (fig. 5) ; la plaque 12 vient en appui sur le plat ou sur une aile du L, l'autre aile du L formant une butée qui, à un jeu près, empêche une translation de la plaque.

Également sur la figure 1, le bord de dessous 17 comprend au moins un (deux ici) élément de liaison 17a, 17b de type charnière pour associer l'élément de toit 10 à un élément de façade 20 par une liaison pivot. En variante, non représentée, le bord de dessous 17 comprend au moins un élément de liaison gauche de type portion de tube adapté pour coopérer, par l'intermédiaire d'un tube de liaison, avec un élément droit correspondant d'un élément de structure adjacent pour associer un élément de toit au dessus d'un élément de façade. L'assemblage est ainsi facilité et aisément démontable. La liaison pivot facilite l'inclinaison de l'élément de toit par rapport à l'élément de façade ; il est ainsi possible de choisir l'inclinaison d'un élément de toit en fonction du nombre d'éléments de toit et donc des dimensions souhaitées pour la structure globale.

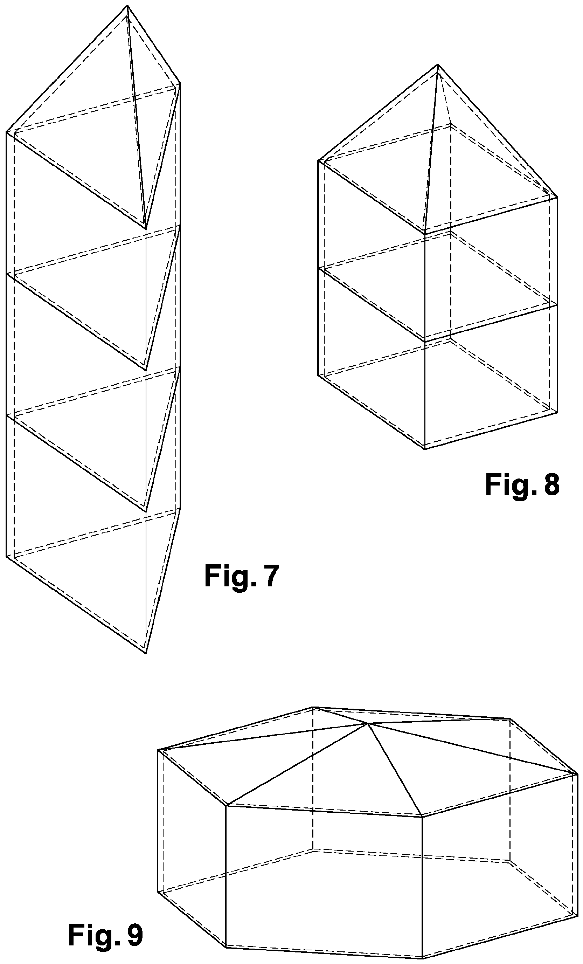

A titre indicatif, un prototype d'élément de toit a été réalisé avec un cadre isocèle comprenant un bord gauche 15 et un bord droit 16 réalisés en profilés en Z de 1,5m de long environ, et un bord de dessous 17 réalisé en un plat L de 1 m de long environ. La plaque 12 a été réalisée en polycarbonate : matériau transparent pour laisser passer la lumière, plutôt léger, et suffisamment rigide pour les dimensions choisies. D'autres matériaux peuvent naturellement être utilisés, par exemple du verre. Pour le prototype, les dimensions du cadre d'un élément de toit ont été choisies de sorte que, pour une structure hexagonal comprenant 6 éléments de toit (fig. 9), les éléments de toit forment un angle de 45° avec l'horizontal.

Un élément de façade 20 est assez similaire à un élément de toit et s'en différencie par sa forme générale rectangulaire. Un élément de façade comprend ainsi (fig. 2, 2a) un panneau 21 rectangulaire comprenant un bord gauche 25, un bord droit 26, un bord de dessous 27 et un bord de dessus 27a ; selon l'invention, il comprend également un élément de liaison gauche 25a, 25b solidaire du bord gauche 25 du panneau et un élément de liaison droit 26a, 26b solidaire du bord droit 26 du panneau ; l'élément de liaison gauche est adapté à coopérer avec un élément de liaison droit d'un élément de façade adjacent pour associer deux éléments de façades adjacents par une liaison pivot.

Comme pour un élément de toit, pour les mêmes raisons et avec les mêmes avantages/ inconvénients, plusieurs modes de réalisation peuvent être envisagés pour les éléments de liaison des éléments de façade, l'essentiel étant dans le cadre de l'invention d'avoir une liaison pivot entre deux éléments de façade. Selon un mode de réalisation (figure 2), un élément de liaison gauche ou droit d'un élément de façade 20 est une portion de tube 25a, 25b, 26a, 26b solidaire du bord gauche 25 ou du bord droit 26 adaptée pour coopérer, par l'intermédiaire d'un tube de liaison 28, 28a avec une portion de tube correspondante 26a, 26b, 25a, 25b solidaire d'un bord droit 26 ou d'un bord gauche 25 formant élément de liaison d'un élément de façade adjacent.

Le panneau 21 rectangulaire d'un élément de façade 20 comprend dans l'exemple des figures 2, 2a, 6 :
- une plaque de forme rectangulaire, par exemple en polycarbonate,
- quatre profilés (ou cornière) formant respectivement le bord gauche 25, le bord droit 26, le bord de dessous 27 et le bord de dessus 27a du panneau rectangulaire, les quatre profilés formant ensemble un cadre servant de support à la plaque rectangulaire.

Sur le bord gauche 25 et le bord droit 26 réalisés ici par des profilés en Z, la plaque 22 vient en appui sur une branche du Z et un corps (= partie centrale) du Z forme une butée qui, à un jeu près, empêche une translation de la plaque dans le plan du cadre. Les moyens de liaison (portions de tube) 25a, 25b, 26a, 26b sont solidarisés (ici soudés) entre la deuxième branche des profilés en Z et le corps des profilés en Z formant le bord gauche 25 et le bord droit 26. Sur le bord de dessous 27 et le bord de dessus 27a réalisés ici par des cornières en L, la plaque 22 vient en appui sur une première aile du L et une deuxième aile du L forme une butée qui, à un jeu près, empêche une translation de la plaque dans le plan du cadre.... Pour un meilleur maintien, la plaque 22 est peut être collée sur le cadre par exemple au silicone ou solidarisée au cadre par tout autre moyen (vis, rivet, ...). De préférence, la plaque 22 est solidarisée au cadre par des moyens amovibles tels que :
- un ou des taquets 22a amovibles coopérant avec un trou correspondant d'un cornière ou d'un profilé du cadre, et / ou
- un gousset (ou des goussets) positionné(s) dans un angle du cadre de sorte que la plaque soit immobilisée localement entre le cadre et le gousset,
- un verrou (ou des verrous), par exemple de type quart de tour, positionné(s) sur la plaque et mobile(s) entre une position ouverte où la plaque n'est pas maintenue contre le cadre et une position fermée où le verrou coopère avec une cornière ou un profilé pour maintenir la plaque contre le cadre.

Sur la figure 6, deux éléments de façade sont représentés partiellement, formant un angle d'environ 60° correspondant à une structure polygonale à trois côtés. Les deux éléments de façade sont associés par une liaison pivot et peuvent pivoter l'un par rapport à l'autre, comme le montre les traits en pointillés sur la figure 6.

A titre indicatif, un prototype d'élément de façade a été réalisé avec des bords verticaux (gauche et droit, profilés en Z) de 1 m de long et des bords horizontaux (bords de dessous et bord de dessus, cornière en L) de 1 m de long également. Comme pour l'élément de toit, la plaque 22 a été réalisée en un panneau de polycarbonate transparent.

Dans l'exemple représenté, le bord de dessous 27 et le bord de dessus 27a d'un élément de façade comprennent chacun deux perçages 29, situés à une distance D respectivement du bord gauche et du bord droit. Les deux perçages permettent de solidariser par des vis deux éléments de façade ou un élément de façade et un élément de toit.

Dans un autre exemple, non représenté, le bord de dessous 27 et le bord de dessus 27a comprennent au moins un élément de liaison gauche ou droit adapté pour coopérer, par l'intermédiaire d'un tube de liaison, avec un élément droit ou gauche correspondant d'un élément de structure adjacent pour :
- associer deux éléments de façade l'un au dessus de l'autre, et /ou
- associer un élément de toit au dessus d'un élément de façade.

Le bord de dessous et le bord de dessus sont ainsi réalisés de manière similaire, et deux éléments de structure sont aisément assemblés ou séparés selon les besoins.

La platine de fixation angulaire 30 est représentée en vue de dessus agrandie sur la figure 4. Elle comprend essentiellement une plaque 31 de positionnement angulaire, comprenant un perçage de référence 32 et une pluralité de perçages complémentaires 33 ; les centres de tous les perçages 32, 33 sont positionnés sur un cercle ; un angle alpha entre un rayon du cercle passant par un perçage complémentaire 33 de rang X et un rayon du cercle passant par le perçage de référence 32 est égal à un angle entre deux côtés d'un polygone régulier à X côtés. Le rayon du cercle est sensiblement égal à la distance D entre le bord gauche (ou droit) d'un élément de façade et le centre d'un perçage 29. Pour faciliter l'usage de la platine, les perçages complémentaires 33 peuvent être numérotés 3, 4, 5, ..., avec des numéros correspondant à la position d'un élément de façade dans une structure comprenant respectivement 3, 4, 5, ... éléments de façade.

La platine de fixation angulaire permet de fixer l'angle entre deux éléments de façade, par un système (non représenté) vis/écrou , un goujon ou un piquet d'ancrage par exemple, en utilisant d'une part les perçages 29 des éléments de façade et d'autre part les perçages angulaires 32, 33 de la platine de fixation. Elle est utile principalement pour le montage de la structure, pour faciliter le positionnement des éléments de façade les uns par rapport aux autres en fonction du nombre d'éléments de façade à associer.

Selon une variante, la platine de fixation angulaire est complétée (figure 3) d'un tube 35 solidaire de la plaque 31 de positionnement angulaire ; l'axe du tube est perpendiculaire à ladite plaque 31 est passe par le centre du cercle sur lequel sont positionnés les perçages 32, 33. Le tube 35 coopère avec l'élément de liaison 25a d'un élément de façade, pour maintenir ledit élément de façades perpendiculaire à la plaque 31. Dans l'exemple représenté, deux perçages additionnels 34 sont également prévus sur la plaque 31 pour faciliter l'arrimage au sol de la platine de fixation par des piquets d'arrimage. Pour l'arrimage de la structure au sol, des câbles métalliques peuvent être fixés entre la structure et la platine de fixation angulaire, ou entre la structure et le sol.

L'élément de toit, l'élément de façade et la platine de fixation angulaire décrits ci-dessus permettent notamment de réaliser des structures de protection pour les plantes exotiques pendant l'hiver. Ces structures en trois dimensions, à géométrie variable sont évolutives et peuvent intégrer tous les polygones.

Une structure selon l'invention comprend N éléments de toit et P éléments de façade, P étant un multiple de N et N étant supérieur ou égal à 3. Dans l'exemple de la figure 7, le système comprend N = 3 éléments de toit et P = 3*N = 9 éléments de façade ; cette configuration est bien appropriée pour la protection d'un arbre de forme longiligne par exemple. Dans l'exemple de la figure 8, le système comprend N = 4 éléments de toit et P = 2*N = 8 éléments de façade ; cette configuration est bien appropriée pour un arbuste volumineux ou un petit massif de plante moyennement haut. Dans l'exemple de la figure 9, le système comprend N = 6 éléments de toit et P = 1*N = 6 éléments de façade ; cette configuration est bien appropriée pour un massif de plante de diamètre un peu plus grand mais peu haut.

Outre les éléments de toit et les éléments de façade à assembler, la structure comprend également, dans l'exemple représenté :
- au moins un tube de liaison 18, 18a adapté à coopérer avec un élément de liaison droit d'un élément de toit et un élément de liaison gauche d'un élément de toit adjacent, pour associer deux éléments de toit adjacents selon une liaison pivot, et / ou
- au moins un tube de liaison de liaison 28 adapté à coopérer avec un élément de liaison droit d'un élément de façade et un élément de liaison gauche d'un élément de façade adjacent, pour associer deux éléments de façades adjacents selon une liaison pivot, et/ou
- selon le mode de réalisation de la structure : au moins un tube de liaison 28a adapté à coopérer avec un élément de liaison gauche d'un élément de façade et un élément de liaison d'un élément de façade positionné en dessous ou au dessus pour l'assemblage vertical de deux éléments de façade positionnés l'un sous l'autre.
Selon un mode de réalisation, un tube de liaison comprend une tige 13, 23 de manoeuvre pour faciliter la manipulation du tube de liaison ; la tige de manoeuvre permet de faire coulisser ou de faire tourner le tube de liaison. La tige de manoeuvre sert aussi de butée pour empêcher que le tube de liaison coulisse à l'intérieur d'un élément de liaison tubulaire au-delà d'une position limite selon une première direction.

Un tube de liaison peut encore comprendre un perçage 14, 24 positionné le long du tube de liaison, une distance M entre le perçage et la tige de manoeuvre étant sensiblement égale à une distance entre un élément de liaison d'un élément de structure et un élément de liaison correspondant d'un élément de structure adjacent lorsque les deux éléments de structure sont en position l'un par rapport à l'autre pour être associés. Le perçage permet de positionner un élément formant butée visant à empêcher que le tube de liaison coulisse à l'intérieur d'un élément de liaison tubulaire au-delà d'une position limite selon une direction opposée à la première direction. Le tube de liaison est ainsi totalement immobilisé en translation à l'intérieur des éléments de liaison d'éléments de structure adjacents. L'élément formant butée est par exemple une vis, une tige, une goupille ou plus généralement tout élément susceptible d'être inséré dans le perçage.

Pour faciliter le montage d'une structure, renforcer sa rigidité globale et faciliter son arrimage au sol, au moins une platine de fixation angulaire, platine adaptée à coopérer avec un élément de liaison d'un élément de façade selon une liaison pivot ; en effet, le tube de liaison 35 de la platine de fixation angulaire 30 s'emboîte dans l'élément de liaison 25a d'un élément de façade pour solidariser ledit élément de façade à la platine de fixation. Plusieurs platines peuvent également être utilisées, par exemple deux ou trois platines sur une structure complète, voire une platine pour chaque élément de façade, en fonction notamment de la hauteur de la structure et des conditions climatiques (vent, ...). Le ou les perçages 34 de chaque platine permettent son arrimage dans le sol par des vis, des piquets ou tout autre moyen approprié.

La structure globale peut encore être complétée par des moyens d'arrimage au sol. Les moyens d'arrimage sont par exemple un (ou des) câble(s). Dans un exemple concret de mise en oeuvre, assurément non limitatif, une extrémité du câble peut être accrochée sur une extrémité d'accrochage de l'élément formant butée ; à cet effet, l'élément formant butée est par exemple une vis ou une goupille dont une tête est conformée en anneau ; une autre extrémité du câble peut être ancrée dans le sol, par exemple par un piquet, par exemple un piquet en forme de tire-bouchon pour un bon ancrage du câble dans le sol.

Enfin, la structure peut comprendre également un moyen de régulation agencé pour :
- extraire un air chaud de la structure lorsqu'une température à l'intérieur de la structure devient supérieure à une température maximale prédéfinie et / ou
- chauffer l'intérieur de la structure lorsque la température à l'intérieur de la structure devient inférieure à une température minimale prédéfinie.

Selon un mode de mise en oeuvre concret, non limitatif, le moyen de régulation peut comprendre :
- un ventilateur positionné dans la plaque d'un élément de structure,
- un radiateur électrique positionné à l'intérieur de la structure,
- une sonde de température positionnée à l'intérieur de la structure, et
- un moyen de pilotage du ventilateur et du radiateur en fonction de la température.

### NOMENCLATURE

10 élément de toit :
   11 panneau
   12 plaque
   12a taquets
   13 tige
   14 perçage
   15, 16, 17 bord gauche, bord droit et bord de dessous
   15a, 15b, 16a, 16b éléments de verrouillage
   17a, 17b charnières
   18, 18a tube de liaison
20 élément de façade :
   21 panneau
   22 plaque
   22a taquets
   23 tige
   24 perçage
   25, 26, 27, 27a bord gauche, bord droit, bord de dessous et bord de dessus
   25a, 25b, 26a, 26b éléments de verrouillage
   28 tube de liaison entre deux éléments de façades adjacents
   28a tube de liaison entre deux éléments de façade positionnés l'un en dessous de l'autre ou entre un élément de liaison et une platine de fixation
   29 perçages
30 platine de fixation
   31 plaque
   32 perçage de référence
   33 perçages complémentaires
   34 perçages additionnels
   35 tube de liaison

## Revendications

1. Élément de structure pour une structure de protection adaptée pour la protection de plantes exotiques, élément comprenant un panneau (11 ; 21) comprenant au moins un bord gauche (15 ; 25), un bord droit (16 ; 26) et un bord de dessous (17 ; 27), **caractérisé en ce qu'**il comprend également un élément de liaison gauche (15a, 15b ; 25a, 25b) solidaire du bord gauche (15 ; 25) du panneau et un élément de liaison droit (16a, 16b ; 26a, 26b) solidaire du bord droit (16 ; 26) du panneau, l'élément de liaison gauche d'un élément de structure étant adapté à coopérer, par l'intermédiaire d'un tube de liaison (28), avec un élément de liaison droit d'un élément de structure adjacent pour associer deux éléments de structure adjacents par une liaison pivot, chaque élément de liaison étant une portion de tube.

2. Élément de structure selon la revendication 1 dans lequel le panneau (11 ; 21) comprend une plaque de forme triangulaire (12) ou de forme rectangulaire (22), par exemple en polycarbonate et
• trois cornières (15, 16, 17) formant respectivement le bord droit, le bord gauche et le bord de dessous d'un panneau triangulaire (11), les trois cornières formant ensemble un cadre servant de support à la plaque triangulaire (12), l'élément de structure formant ainsi un élément de toit triangulaire, ou
• quatre profilés (25, 26, 27a, 27b) formant respectivement le bord droit, le bord gauche, le bord de dessous et le bord de dessus d'un panneau rectangulaire (21), les quatre profilés formant ensemble un cadre servant de support à la plaque rectangulaire (22), l'élément de structure formant ainsi un élément de façade rectangulaire.

3. Élément de structure selon la revendication 2 comprenant également au moins un élément de maintien agencé pour maintenir la plaque à l'intérieur du cadre, l'élément de maintien étant :
• un taquet amovible coopérant avec un trou correspondant d'une cornière ou d'un profilé du cadre, et / ou
• un gousset positionné dans un angle du cadre, et / ou
• un verrou quart de tour positionné sur la plaque et mobile entre une position ouverte et une position fermée où le verrou coopère avec une cornière.

4. Élément de structure selon l'une des revendications 2 à 3, de type élément de toit, dans lequel le bord de dessous (17) comprend au moins un élément de liaison gauche de type portion de tube adapté pour coopérer, par l'intermédiaire d'un tube de liaison, avec un élément droit correspondant d'un élément de structure adjacent pour associer un élément de toit au dessus d'un élément de façade par une liaison pivot.

5. Élément de structure selon l'une des revendications 2 à 3, de type élément de façade, dans lequel le bord de dessous 27 et le bord de dessus 27a comprennent au moins un élément de liaison gauche ou droit adapté pour coopérer, par l'intermédiaire d'un tube de liaison, avec un élément droit ou gauche correspondant d'un élément de structure adjacent pour :
• associer deux éléments de façade l'un au dessus de l'autre, et /ou
• associer un élément de toit au dessus d'un élément de façade.

6. Platine de fixation (30) comprenant une plaque de positionnement (31), plaque comprenant un perçage de référence (32) et une pluralité de perçages complémentaires (33), les centres de tous les perçages complémentaires étant positionnés sur un cercle, un angle entre un rayon du cercle passant par un perçage complémentaire de rang X et un rayon du cercle passant par le perçage de référence formant un angle égal à un angle entre deux côtés d'un polygone régulier à X côtés.

7. Platine selon la revendication 6 comprenant également un tube de liaison (35) s'étendant depuis la plaque de positionnement, un axe du tube de liaison (35) s'étendant depuis un centre du cercle selon une direction perpendiculaire à la plaque.

8. Structure de protection adaptée pour la protection des plantes exotiques, structure comprenant N éléments de toit (10) selon l'une des revendications 2 à 5 et P éléments de façade (20) selon l'une des revendications 2 à 5, P étant un multiple de N et N étant supérieur ou égal à 3.

9. Structure selon la revendication 8 comprenant également au moins une platine de fixation (30) selon l'une des revendications 9 ou 10, platine adaptée à coopérer avec un élément de liaison d'un élément de façade selon une liaison pivot.

10. Structure selon l'une des revendications 8 à 9, comprenant également :
• au moins un tube de liaison (18) adapté à coopérer avec un élément de liaison droit d'un élément de toit et un élément de liaison gauche d'un élément de toit adjacent, pour associer deux éléments de toit adjacents selon une liaison pivot, et / ou
• au moins un tube de liaison (28) adapté à coopérer avec un élément de liaison droit d'un élément de façade et un élément de liaison gauche d'un élément de façade adjacent, pour associer deux éléments de façades adjacents selon une liaison pivot.

11. Structure selon la revendication 10 dans laquelle un tube de liaison comprend une tige de manoeuvre (13, 23).

12. Structure selon l'une des revendications 10 ou 11 dans laquelle le tube de liaison comprend un perçage (14, 24) positionné le long du tube de liaison, une distance (M) entre le perçage et la tige de manoeuvre étant sensiblement égale à une distance entre un élément de liaison d'un élément de structure et un élément de liaison correspondant d'un élément de structure adjacent lorsque les deux éléments de structure sont en position l'un par rapport à l'autre pour être associés.

13. Structure selon l'une des revendications 8 à 12 comprenant également des moyens pour arrimer la structure au sol.

14. Structure selon l'une des revendications 8 à 13 comprenant également un moyen de régulation agencé pour :
• extraire un air chaud de la structure lorsqu'une température à l'intérieur de la structure devient supérieure à une température maximale prédéfinie et / ou
• chauffer l'intérieur de la structure lorsque la température à l'intérieur de la structure devient inférieure à une température minimale prédéfinie.
